# EUROPÄISCHE PATENTSCHRIFT

(11) **EP 0 808 988 B1**
(45) Veröffentlichungstag und Bekanntmachung des Hinweises auf die Patenterteilung: **19.12.2001**
(21) Anmeldenummer: 97106176.7
(22) Anmeldetag: 15.04.1997
(51) Int. Cl.: F01B 3/00

(54) **Hohlkolben mit radial verschweisstem Deckel**
Hollow piston with a radially welded cover
Piston creux avec un fond soudé radialement

(30) Priorität: 20.05.1996 DE 19620167
(43) Veröffentlichungstag der Anmeldung: 26.11.1997
(73) Patentinhaber: BRUENINGHAUS HYDROMATIK GMBH, 89275 Elchingen (DE)
(72) Erfinder: Beck, Josef, 72401 Haigerloch 2 (DE); Wagner, Manfred, 72160 Horb (DE)
(74) Vertreter: Körfer, Thomas, Dipl.-Phys.

(56) Entgegenhaltungen:
- DE-A- 2 653 867
- DE-A- 3 602 651
- GB-A- 1 363 347
- US-A- 3 319 575
- US-A- 5 265 331

## Beschreibung

Die Erfindung betrifft einen Hohlkolben für eine Kolbenmaschine, insbesondere eine Axialkolbenmaschine, und ein Verfahren zur Herstellung eines derartigen Hohlkolbens.

Die bei Axialkolbenmaschinen üblicherweise eingesetzten Massivkolben (Fig. 3A) setzen einem Betrieb mit höheren Drehzahlen Grenzen. Bei höheren Drehzahlen ergeben sich Festigkeitsprobleme für die Zylinder aufgrund der großen Fliehkräfte und für die Kolben-Rückhalteeinrichtung aufgrund der großen Massenkräfte sowie thermische Probleme an den Berührungsflächen zwischen Kolben und Zylinder aufgrund der aus den Fliehkräften resultierenden Reibungskräfte. Um Axialkolbenmaschinen mit erhöhter Drehzahl zu betreiben, werden daher Hohlkolben eingesetzt.

Hohlkolben sind in verschiedener Bauweise bereits bekannt. Die bekannten Bauformen werden nachstehend anhand der Figuren 3B bis 3D kurz beschrieben. Die Bauform der hohl gebohrten Kolben (Fig. 3B) hat den Nachteil, daß der im Kolben entstehende Hohlraum mit Strömungsmittel gefüllt ist. Dies hat zur Folge, daß dieser Volumenbereich bei jedem Kolbenhub komprimiert und wieder entspannt wird, was zu einer Verschlechterung des Wirkungsgrades führt.

Es ist daher bereits bekannt, die Hohlkolben mit einem Deckel zu verschließen. Der Deckel kann dabei durch Drehreibschweißen, wie dies in Fig. 3C gezeigt ist und z.B. aus der DE 23 64 725 C2 bekannt ist, auf den Hauptkörper aufgebracht werden. Die Verbindung von Deckel und Hauptkörper mittels Drehreibschweißen hat jedoch den Nachteil, daß aufgrund der entstehenden Hitze im Bereich der Schweißnaht eine Materialverhärtung auftritt. Um das nachträgliche Einbringen der zentralen Bohrung zu ermöglichen, ist daher eine Glühbehandlung notwendig. Ferner ist eine Beseitigung des Schweißwulstes nach dem Verschweißen von Deckel und Hauptkörper erforderlich.

Als Alternative zur Reibschweißverbindung wurde in der DE 36 02 651 A1 und der US-33 19 575 bereits vorgeschlagen, den Deckel und den Hauptkörper mittels Elektronenstrahl- oder Laserschweißens zu verbinden. In den Deckel und in den Hauptkörper werden dabei Passungsstellen eingearbeitet und der Deckel wird in den Hauptkörper axial eingepreßt. Die Einbringung der Schweißnaht erfolgt dabei ebenfalls in axialer Richtung. Dabei müssen die äußere Schweißnaht zur Verbindung mit dem Mantel des Hauptkörpers und die innere Schweißnaht zur Verbindung mit dem zentralen Dorn des Hauptkörpers in jeweils getrennten Arbeitsgängen eingebracht werden, was zu einem relativ hohen Kostenaufwand führt. Ferner weist diese Bauform den Nachteil auf, daß die Schweißnähte während des Betriebs der Kolbenmaschine mit Schubkräften belastet werden, wenn auf den Deckel der Druk des zu komprimierenden Arbeitsmediums einwirkt. Dies kann zum Bruch der Schweißnähte führen.

Es ist daher die Aufgabe der vorliegenden Erfindung, einen Hohlkolben mit kostengünstiger Verbindung zwischen Hauptkörper und Deckel und ein zugehöriges Herstellungsverfahren zu schaffen, wobei sichergestellt ist, daß eine Zentralbohrung nach dem Verbinden von Deckel und Hauptkörper ohne weiteren Arbeitsgang in den Hohlkolben einbringbar ist.

Die Aufgabe wird hinsichtlich des Hohlkolbens durch die Merkmale des Anspruches 1 oder 2 gelöst.

Der Erfindungsgedanke beruht darauf, daß der Deckel an einer planen, senkrecht zur Längsachse des Hohlkolbens ausgerichteten Fläche mit dem Hauptkörper so verschweißt ist, daß sich eine radiale Schweißnaht über den gesamten Bereich des Mantels jedoch nur über einen solchen peripheren Bereich des Dorns erstreckt, der nicht bis zum Umfang der einzubringenden Zentralbohrung reicht.

Durch die radiale Ausrichtung der Schweißnaht wird erreicht, daß sowohl die äußere Schweißnaht zur Verbindung mit dem Mantel des Hauptkörpers als auch die innere Schweißnaht zur Verbindung mit dem Dorn des Hauptkörpers in einem Arbeitsgang eingebracht werden können, was zu einer erheblichen Kosteneinsparung gegenüber der bekannten axialen Ausrichtung der Schweißnähte führt. Die Tiefe der Schweißnaht in radialer Richtung ist so bemessen, daß der Bereich, in welchen die Zentralbohrung einzubringen ist, von der Schweißnaht nicht erfaßt wird. Die Zentralbohrung kann daher unmittelbar nach dem Schweiß-Arbeitsgang ohne einen vorhergehenden Glüh-Arbeitsgang eingebracht werden.

Die Ansprüche 3 bis 6 beinhalten vorteilhafte Weiterbildungen des erfindungsgemäßen Hohlkolbens.

Wenn der Deckel mit einem gegenüber dem äußeren Umfang des Mantels des Hauptkörpers geringeren Durchmesser ausgebildet ist, wird entsprechend Anspruch 3 erreicht, daß die Schweißnaht gegenüber dem äußeren Umfang des Mantels zurückgesetzt ist. Dies hat den Vorteil, daß die Schweißnaht nicht die Lauffläche des Zylinders berührt und daher keine Nachbearbeitung der Schweißnaht erfolgen muß.

Entsprechend Anspruch 4 weist der Deckel eine dem Ringraum des Hauptkörpers gegenüberliegende Ausnehmung auf, um die seitliche Ablenkung des Elektronenstrahls zu verhindern.

Zum erfindungsgemäßen Verbinden von Deckel und Hauptkörper eignet sich insbesondere Elektronenstrahlschweißen entsprechend Anspruch 5. Die Aufgabe wird hinsichtlich des Herstellungsverfahrens des Kolbens durch die Merkmale des Anspruches 7 gelöst.

Durch das Drehen von Hauptkörper und Deckel während des Schweißvorganges wird eine gleichmäßige radiale Einbringung der Schweißnaht gewährleistet. Die Schweißnaht wird dabei nur so tief eingebracht, daß der Bereich der nachträglich in den Deckel und den Dorn des Hauptkörpers zu bohrenden Zentralbohrung nicht erfaßt wird. Die Zentralbohrung kann daher ohne vorhergehendes Glühen eingebracht werden, da im Bereich der Zentralbohrung das Material durch den Schweißvorgang nicht verhärtet wird.

Die Erfindung wird nachfolgend anhand eines bevorzugten Ausführungsbeispiels und der Darstellung der sich gegenüber dem Stand der Technik ergebenden Vorteile näher erläutert. Es zeigen:
- Fig. 1A: einen Hohlkolben entsprechend der vorliegenden Erfindung mit abgenommenem Deckel,
- Fig. 1B: einen Hohlkolben entsprechend der vorliegenden Erfindung mit verschweißtem Deckel,
- Fig. 2: eine Axialkolbenmaschine, bei welcher der erfindungsgemäße Hohlkolben eingesetzt wird,
- Fig. 3A: einen Massivkolben entsprechend dem Stand der Technik,
- Fig. 3B: einen hohlgebohrten Kolben entsprechend dem Stand der Technik,
- Fig. 3C: einen Hohlkolben entsprechend dem Stand der Technik, der mittels Drehreibschweißen hergestellt wurde,
- Fig. 3D: einen Hohlkolben entsprechend dem Stand der Technik, dessen Deckel mit dem Hauptkörper durch axiales Elektronenstrahlschweißen verbunden ist,
- Fig. 4A bis 4C: verschiedene Bearbeitungszustände bei der Herstellung eines Hohlkolbens mittels Drehreibschweißen entsprechend dem Stand der Technik,
- Fig. 5: die Wärmeeinflußzone bei dem erfindungsgemäßen Schweißvorgang,
- Fig. 6: die Wärmeeinflußzone beim Drehreibschweiß-Verfahren entsprechend dem Stand der Technik,
- Fig. 7: der Deckel des erfindungsgemäßen Hohlkolbens in vergrößerter Darstellung,
- Fig. 8: der Deckel eines Hohlkolbens zur Verbindung mittels Drehreibschweißen entsprechend dem Stand der Technik,
- Fig. 9: die Kräftebeanspruchung des erfindungsgemäßen Hohlkolbens,
- Fig. 10: die Kräftebeanspruchung eines Hohlkolbens entsprechend dem Stand der Technik mit axialen Schweißnähten,

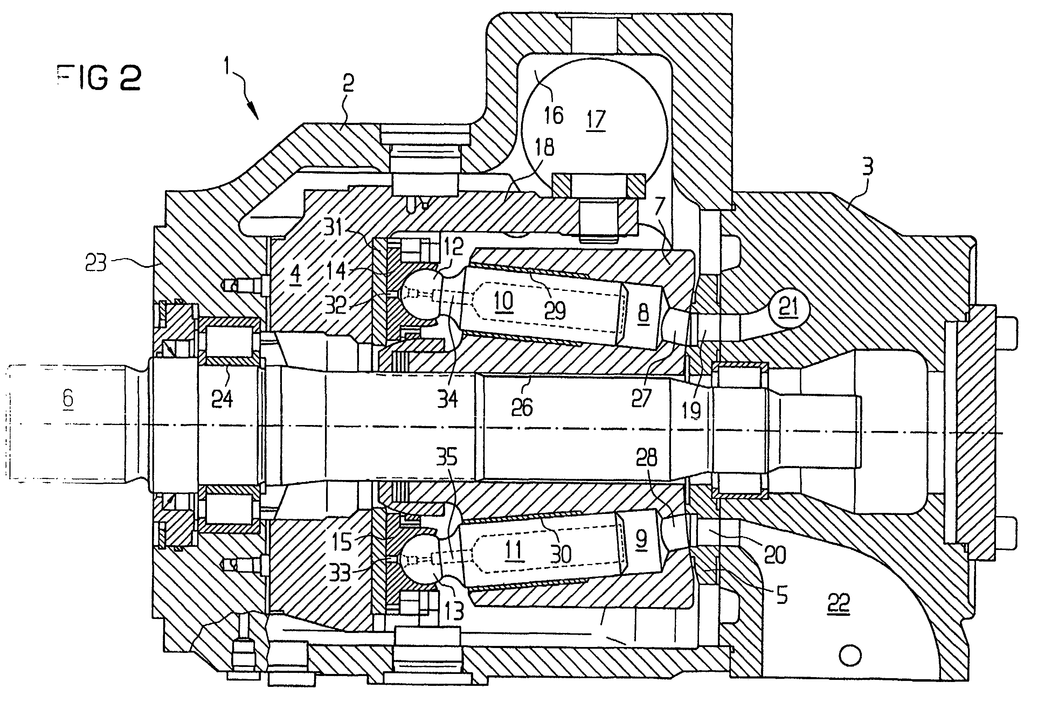

Um das Verständnis der Erfindung zu erleichtern, wird zunächst anhand von Fig. 2 eine Axialkolbenmaschine beispielhaft beschrieben, bei welcher die erfindungsgemäßen Hohlkolben zum Einsatz kommen. Die Erfindung ist jedoch nicht auf Axialkolbenmaschinen begrenzt. Vielmehr können die erfindungsgemäßen Hohlkolben bei unterschiedlichen Kolbenmaschinen zum Einsatz kommen.

Die in Fig. 2 dargestellte Axialkolbenmaschine 1 ist in Schrägscheibenbauweise mit verstellbarem Verdrängungsvolumen ausgeführt und umfaßt in bekannter Weise als wesentliche Bauteile ein hohlzylindrisches Gehäuse 2, einen am Gehäuse 1 befestigten Anschlußblock 3, eine Schrägscheibe 4, einen Steuerkörper 5, eine Triebwelle 6, eine Zylindertrommel 7, in welcher die Zylinderbohrungen 8, 9 radial gleichmäßig verteilt angeordnet sind. In den Zylinderbohrungen 8, 9 sind die Hohlkolben 10, 11 verschiebbar angeordnet, wobei sich die im Ausführungsbeispiel als Kugelköpfe 12, 13 ausgebildeten Gelenkköpfe der Hohlkolben 10, 11 über Gleitschuhe 14, 15 an der Schrägscheibe 4 abstützen.

Eine in einer Ausbuchtung 16 des Gehäuses 2 untergebrachte Stelleinrichtung 17 greift über einen sich in Richtung auf den Anschlußblock 3 erstreckenden Arm 18 an der Schrägscheibe 4 an und dient zum Verschwenken derselben um eine zur Schwenkrichtung senkrechte Schwenkachse.

Der Steuerkörper 5 ist an der dem Gehäuse-Innenraum zugewandten Innenfläche des Anschlußblocks 3 befestigt und mit zwei durchgehenden Öffnungen in Form von nierenförmigen Steuerschlitzen 19, 20 versehen, die über einen Druckkanal 21 bzw. Saugkanal 22 im Anschlußblock 3 an eine nicht gezeigte Druck- bzw. Saugleitung angeschlossen sind. Die dem Gehäuse-Innenraum zugewandte und sphärisch ausgebildete Steuerfläche des Steuerkörpers 5 dient als Lagerfläche für die Zylindertrommel 7.

Die Triebwelle 6 ragt durch eine Durchgangsbohrung in der Gehäuse-Stirnwand 23 in das Gehäuse 2 hinein und ist mittels eines Lagers 24 in dieser Durchgangsbohrung sowie mittels eines weiteren Lagers 25 im Anschlußblock 3 drehbar gelagert. Die Zylindertrommel 7 ist mittels einer Keilnut-Verbindung 26 drehfest mit der Triebwelle 6 verbunden.

Die Zylinderbohrungen sind mit Mündungskanälen 27, 28 versehen, die auf dem gleichen Teilkreis wie die Steuerschlitze 19, 20 des Steuerkörpers 5 ausmünden. In die Zylinderbohrungen 8, 9 ist je eine Laufbuchse 29, 30 eingesetzt. Jeder Gleitschuh 14, 15 ist an seiner der Gleitscheibe 31 der Schrägscheibe 4 zugewandten Gleitfläche mit je einer nicht gezeigten Drucktasche versehen, die über je eine Durchgangsbohrung 32, 33 im Gleitschuh 14, 15 an einem abgestuften, axialen Durchgangskanal 34, 35 im zugehörigen Kolben 10, 11 angeschlossen und auf diese Weise mit dem vom Kolben 10, 11 in der Zylinderbohrung 8, 9 abgegrenzten Arbeitsraum des Zylinders verbunden ist. In jedem axialen Durchgangskanal 34, 35 ist im Bereich des zugeordneten Kugelkopfes 12, 13 eine Drossel ausgebildet.

Hinsichtlich der dertaillierten Beschreibung einer Axialkolbenmaschine dieser Bauart wird auf die DE 44 23 023 A1 verwiesen.

Die vorliegende Erfindung betrifft eine Weiterbildung an den Hohlkolben 10, 11.

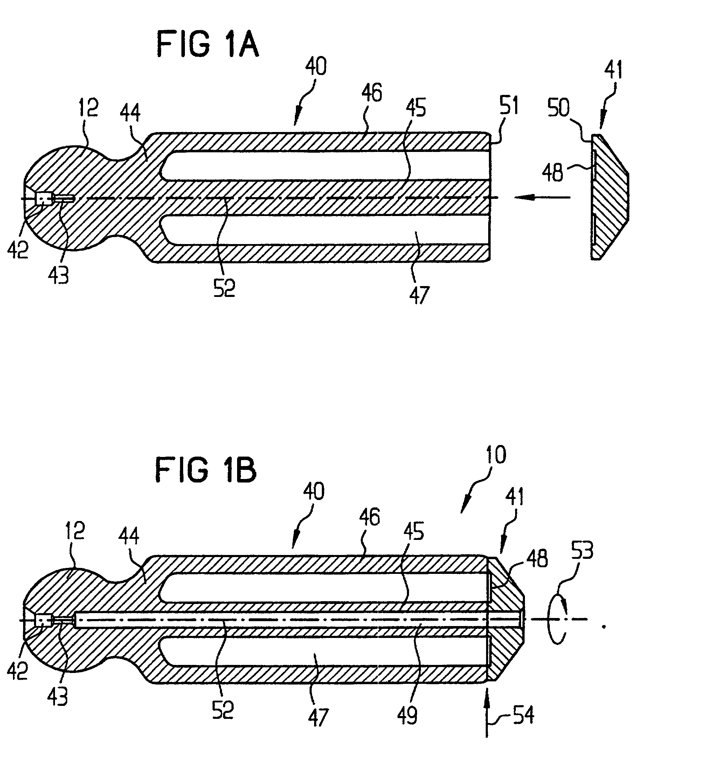

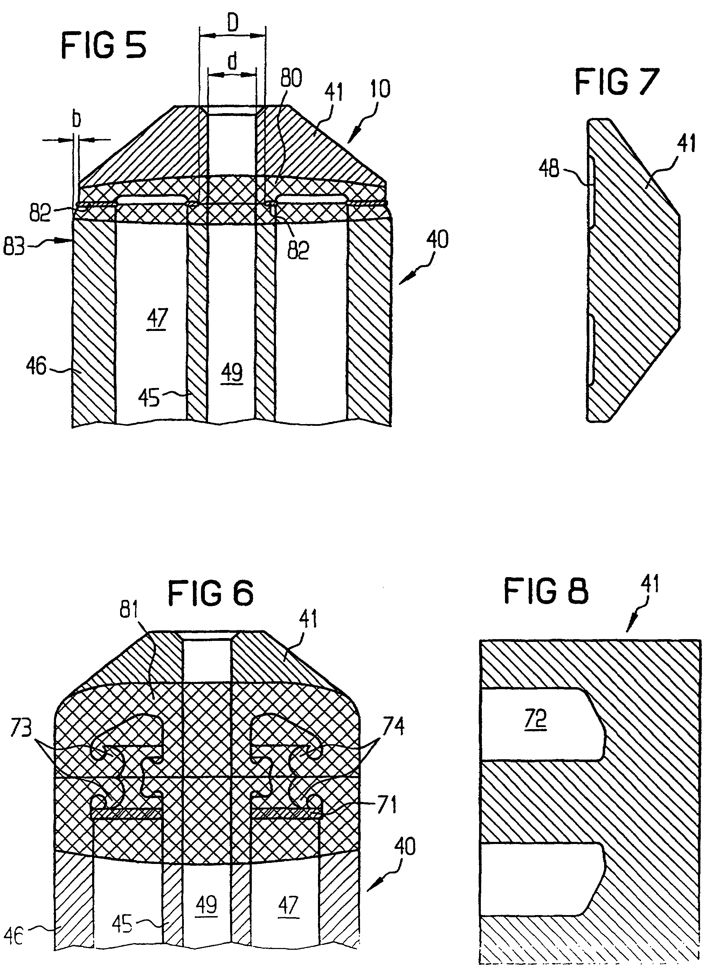

Ein Schnitt durch einen erfindungsgemäß ausgebildeten Hohlkolben 10 ist in den Figuren 1A und 1B dargestellt. Der erfindungsgemäße Hohlkolben 10 besteht aus einem Hauptkörper 40 und einem mit dem Hauptkörper 40 verschweißbaren Deckel 41. Der Hauptkörper 40 weist einen im Ausführungsbeispiel als Kugelkopf 12 ausgebildeten Gelenkkopf auf mit einer Kugelkopfbohrung 42 und Drosselstelle 43. Der Kugelkopf 12 ist an einer Stirnwand 44 angeformt. Von der von dem Kugelkopf 12 abgelegenen Seite der Stirnwand 44 erstreckt sich ein zentraler Dorn 45 und ein den zentralen Dorn 45 mit Abstand umschließender Mantel 46. Der zwischen dem zylinderförmigen Dorn 45 und dem hohlzylinderförmigen Mantel 46 entstehende Ringraum 47 wird durch den Deckel 41 verschlossen, so wie dies in Fig. 1B dargestellt ist. Der Deckel 41 weist eine aus Fig. 7 im Detail besser zu erkennende ringförmige Ausnehmung 48 auf, die nach Aufsetzen des Deckels 41 auf den Hauptkörper 40 dem Ringraum 47 gegenüberliegt.

Nach Verschweißen des Deckels 41 mit dem Hauptkörper 40 wird eine den Deckel 41 und den Dorn 45 des Hauptkörpers 40 durchdringende Zentralbohrung 49 in den Hohlkolben 10 eingebracht, die sich bis zur Drosselstelle 43 im Kugelkopf 12 erstreckt. Auf diese Weise wird eine Verbindung zwischen dem Arbeitsvolumen der Zylinderbohrungen 8, 9 und den Durchgangsbohrungen 32, 33 in den Gleitschuhen 14, 15 geschaffen.

Erfindungsgemäß weisen der Deckel 41 und der Hauptkörper 40 jeweils eine plane Stirnfläche 50, 51 auf, die im zusammengefügten Zustand von Deckel 41 und Hauptkörper 40 aneinanderliegen. Die planen Flächen 50 und 51 sind dabei senkrecht zur Längsachse 52 des Hohlkolbens 10 ausgerichtet.

Nach Zusammenfügen von Deckel 41 und Hauptkörper 40 werden diese vorzugsweise mittels Elektronenstrahlschweißen in radialer Richtung miteinander verschweißt. Dazu werden Hauptkörper 40 und Deckel 41 synchron mit gleicher Drehgeschwindigkeit um die Längsachse 52 des Hohlkolbens 10 in Rotation versetzt, wie dies durch den Pfeil 53 in Fig. 1B angedeutet ist. Die Nahtstelle zwischen dem Deckel 41 und dem Hauptkörper 40 wird einem in Fig. 1B durch den Pfeil 54 angedeuteten Elektronenstrahl einer nicht dargestellten Elektronenstrahl-Schweißanlage ausgesetzt. Dabei bildet sich an der Nahtstelle zwischen Deckel 41 und Hauptkörper 40 eine vom Umfang in Richtung auf die zentrale Längsachse 52 radial wachsende Schweißnaht 82, die aufgrund der Rotation des Hohlkolbens 10 über den gesamten Umfang gleichmäßig ausgebildet wird.

Entsprechend der Erfindung wird der Elektronenstrahl in seiner Intensität so geregelt, daß die Schweißnaht einen vorgegebenen Abstand von der zentralen Längsachse 52 des Hohlkolbens 10 erreicht, der größer ist als der Durchmesser der in einem weiteren Arbeitsgang einzubringenden Zentralbohrung 49. Dadurch wird sichergestellt, daß die Schweißnaht jenen zentralen Bereich des Dorns 45 ausspart, durch welchen in einem weiteren Arbeitsgang die Zentralbohrung 49 hindurchgebohrt werden muß. Dies ist wesentlich, da mit der Erhitzung während des Schweißvorganges eine Verhärtung des Materials einhergeht, die durch einen zusätzlichen Glüh-Arbeitsgang rückgängig gemacht werden müßte. Da entsprechend der Vorgehensweise der vorliegenden Erfindung die Intensität und Zeitdauer der Elektronenstrahlung jedoch so gewählt wird, daß der für die Zentralbohrung 49 benötigte zentrale Bereich von der Schweißnaht 82 nicht erfaßt wird, wird dieser zusätzliche Glüh-Arbeitsgang eingespart.

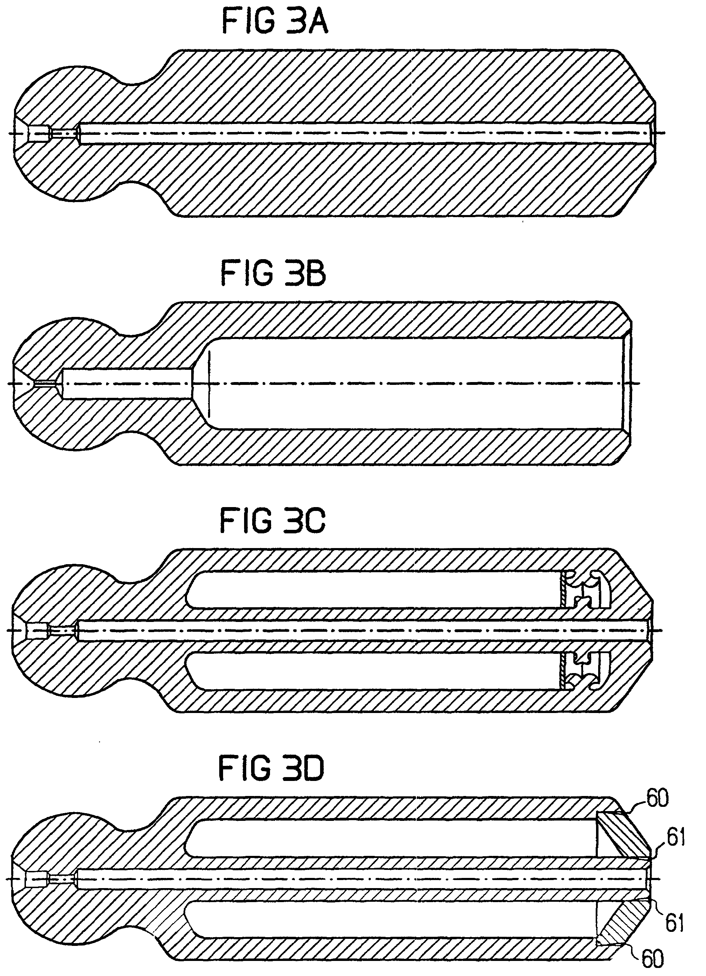

Ein weiterer Vorteil ergibt sich für die erfindungsgemäße radiale Schweißnaht-Führung im Vergleich zu der in Fig. 3D gezeigten, bekannten axialen Schweißnaht-Führung, daß bei der erfindungsgemäßen radialen Schweißnaht-Führung sowohl die Verbindung zwischen dem Deckel 41 und dem Mantel 46 des Hauptkörpers 40 als auch die Verbindung zwischen dem Deckel 41 und dem Dorn 45 des Hauptkörpers 40 in einem einzigen Schweiß-Arbeitsgang hergestellt werden kann. Im Gegensatz dazu müssen die beiden Schweißnähte 60 und 61 in Fig. 3D in zwei getrennten Arbeitsgängen eingebracht werden.

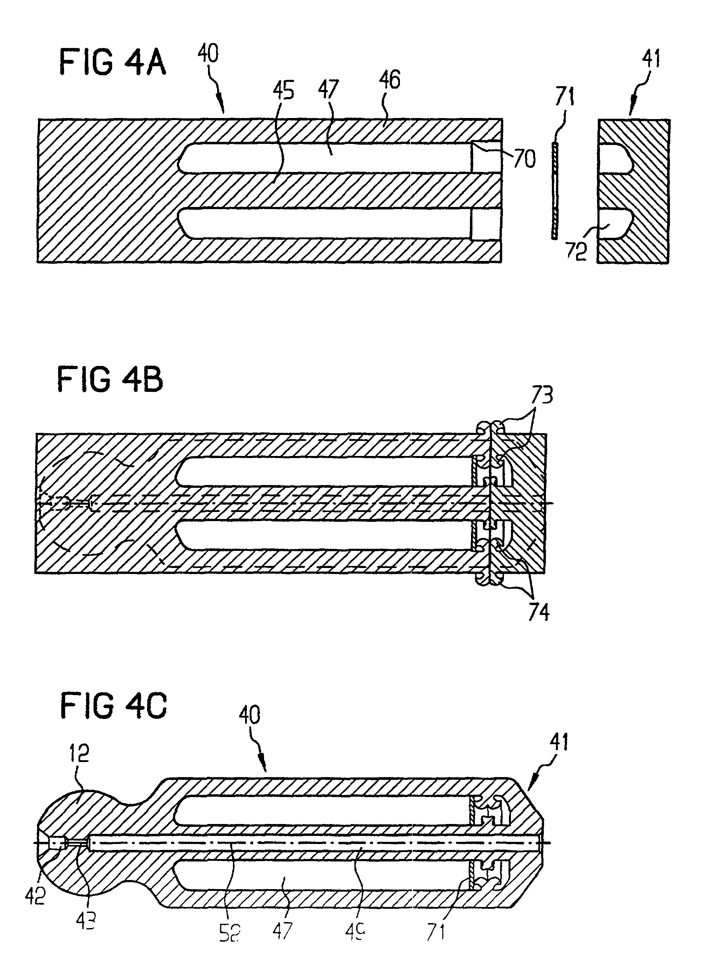

Im Vergleich zu der weiterhin bekannten Drehreibschweiß-Verbindung zwischen Deckel 41 und Hauptkörper 40 ergibt sich der Vorteil, daß eine Vielzahl von Arbeitsgängen eingespart werden können. Um einen besseren Vergleich der beiden Verfahren zu ermöglichen, werden die Arbeitsschritte des aus dem Stand der Technik bekannten Drehreibschweiß-Verfahrens anhand der Fig. 4A bis 4C kurz dargestellt.

Bei dem Drehreibschweiß-Verfahren werden zunächst Rohlinge für den Hauptkörper 40 und den Deckel 41 vorbereitet, wobei in den Hauptkörper 40 der Ringraum 47 eingearbeitet wird. Der Ringraum 47 weist einen Anschlag 70 auf, bis zu welchem die Stützscheibe 71 in den Ringraum 47 eingeschoben wird. Die Stützscheibe 71 arretiert der Dorn 45 während des Drehreibschweißens. Zur Aufnahme des Schweißwulstes muß in den Deckel 41 in einem aufwendigen Arbeitsgang ebenfalls eine Ringbohrung 72 eingebracht werden. Sodann werden die Rohlinge für den Deckel 41 und den Hauptkörper 40 mittels Drehreibschweißens miteinander verschweißt.

Der Zustand nach dem Verschweißen ist in Fig. 4B dargestellt. Durch den Schweißvorgang entstehen massive, relativ harte Schweißwulste, die außenseitig entfernt werden müssen. Erst jetzt kann die Kontur des Hohlkolbens 10 aus den miteinander verschweißten Rohlingen herausgearbeitet werden. Vor dem Einbringen der Zentralbohrung 49 ist jedoch ein zusätzlicher Glüh-Arbeitsgang erforderlich, um die beim Drehreibschweißen verhärteten Materialbereiche für die Bearbeitung zu erweichen.

Im Vergleich zu der Vielzahl der beim Drehreibschweiß-Verfahren erforderlichen Arbeitsgänge weist die erfindungsgemäße Vorgehensweise einige Vorteile auf. So kann sowohl der Glüh-Arbeitsgang als auch das Nachbearbeiten der Schweißwulste entfallen. Ferner kann der Deckel 41 und der Hauptkörper 40 bereits in seiner endgültigen Kontur vor dem Schweißarbeitsgang bearbeitet werden. Eine Stützscheibe 71 zur Zentrierung des Dorns 45 während des Schweiß-Arbeitsgangs ist nicht erforderlich, was die Kosten erheblich reduziert.

Weitere Vorteile der erfindungsgemäßen Schweißverbindung gegenüber dem bekannten Drehreibschweiß-Verfahren werden nachfolgend anhand der Figuren 5 bis 8 beschrieben.

In den Figuren 5 und 6 ist der Bereich der Wärmeeinflußzone, die eine Aushärtung des Materials hervorrufen kann, vergleichsweise für das erfindungsgemäße Schweißverfahren (Fig. 5) und das bekannte Drehreibschweiß-Verfahren (Fig. 6) gegenübergestellt. Aus dem Vergleich ist unmittelbar ersichtlich, daß die Wärmeeinflußzone 80 des in Fig. 5 dargestellten erfindungsgemäßen Radial-Schweißverfahrens im Vergleich zu der Wärmeeinflußzone 81 des in Fig. 6 dargestellten Drehreibschweiß-Verfahrens eine wesentlich geringere Ausdehnung besitzt.

Ferner ist aus Fig. 5 erkennbar, daß der innere Durchmesser D der Schweißnaht 82 zwar kleiner als der Durchmesser des Dorns 45, jedoch größer als der Durchmesser d der in den Dorn 45 einzubringenden Zentralbohrung 49 ist. Dadurch wird zwar die Peripherie des Dorns 45, nicht jedoch der Bereich der Zentralbohrung 49, von der Schweißnaht 82 erfaßt.

Ferner ist aus Fig. 5 erkennbar, daß der Radius des Deckels 41 gegenüber dem Radius des Mantels 46 des Hauptkörpers 40 um den Abschnitt b reduziert ist. Dadurch wird erreicht, daß die Schweißnaht 82 gegenüber der Laufzone 83 des Hohlkolbens 10 in Richtung auf das Zentrum des Hohlkolbens zurückgesetzt ist und somit die Lauffläche der zugehörigen Zylinderbohrung 8, 9 nicht berührt. Die Schweißnähe 82 müssen daher nicht nachgearbeitet werden. Da die Schweißnaht 82 außerhalb der Laufzone 83 des Hohlkolbens 10 liegt, entstehen keine unterschiedlichen Eigenschaften auf der Lauffläche 83, insbesondere keine Härteunterschiede oder Formabweichungen, wie bei der drehreibgeschweißten Ausführung.

Ein weiterer Vorteil des erfindungsgemäßen Verfahrens im Vergleich zum bekannten Drehreibschweiß-Verfahren wird anhand der Fig. 7 und 8 dargestellt. Dabei zeigt Fig. 7 den Deckel 41 in vergrößerter Darstellung, während Fig. 8 den Rohling zur Herstellung des Deckels 41 für das Drehreibschweiß-Verfahren zeigt. Während in den Deckel 41 des erfindungsgemäßen Hohlkolbens lediglich eine ringförmige Ausnehmung 48 geringer Tiefe einzuarbeiten ist, die ggfs. sogar entfallen kann, muß der Deckel-Rohling für das Drehreibschweiß-Verfahren eine relativ tiefe Ringbohrung 72 aufweisen. Bei der Bemessung der Tiefe der Ringbohrung 72 ist sowohl der Materialabtrag während des Drehreibschweiß-Verfahrens als auch die Ausdehnung des dabei enstehenden Schweißschwulstes zu berücksichtigen. Der Aufbau des Deckels 41 für den erfindungsgemäßen Hohlkolben 10 ist dagegen wesentlich einfacher.

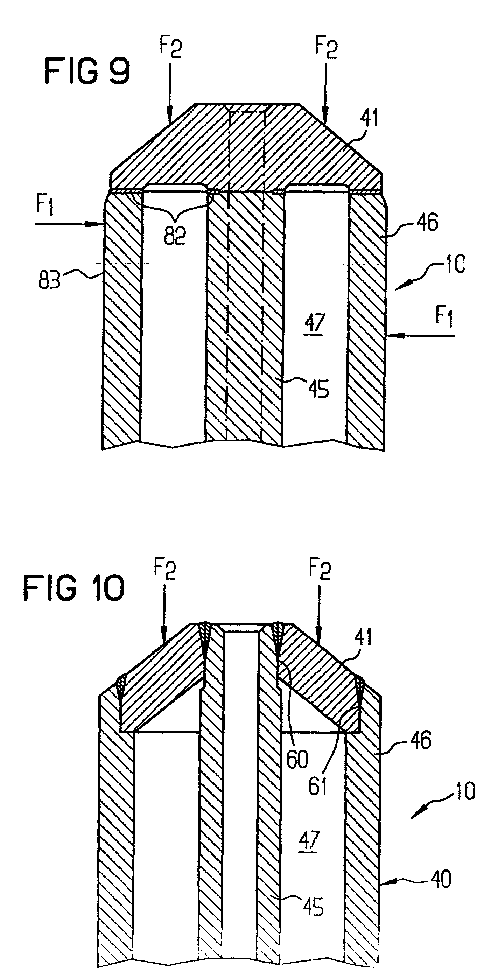

Anhand der Figuren 9 und 10 werden nachfolgend die Vorteile des erfindungsgemäß ausgebildeten Hohlkolbens im Vergleich zu einem Hohlkolben mit axial ausgebildeten Elektronenstrahl-Schweißnähten entsprechend Fig. 3D beschrieben.

Fig. 9 zeigt einen ausschnittsweisen Schnitt durch den erfindungsgemäßen Hohlkolben. Durch das Kräftepaar F₂ wird veranschaulicht, daß die auf den Hohlkolben 10 einwirkenden Druckkräfte des in den Arbeitszylindern 8, 9 befindlichen Arbeitsmediums in senkrechter Richtung auf die Schweißnaht 82 einwirken. Bei dem aus dem Stand der Technik bekannten Hohlkolben 10 mit axial ausgerichteten Schweißnähten 60, 61 hingegen wirkt die Druckbelastung F₂ des Kolbens parallel zur Richtung der Schweißnähte, was eine Schubbeanspruchung der Schweißnähte 60, 61 nach sich zieht. Dies führt im Vergleich zur erfindungsgemäßen Ausbildung zu einer höheren Beanspruchung der Schweißnähte und kann einen vorzeitigen Bruch der Schweißnähte hervorrufen.

Ferner ist es bei der in Fig. 10 gezeigten bekannten Ausbildung des Hohlkolbens 10 erforderlich, in dem Deckel 41 und dem Hauptkörper 40 jeweils zwei Passungsstellen vorzusehen, an welchen der Deckel 41 in den Hauptkörper 40 vor dem Schweißarbeitsgang eingedrückt wird. Ferner müssen im Gegensatz zur erfindungsgemäßen Ausbildung zwei getrennte Schweißnähte 60, 61 in getrennten Arbeitsgängen eingebracht werden. Im Gegensatz dazu ist bei der erfindungsgemäßen Ausbildung nur ein Schweiß-Arbeitsgang erforderlich. Die Fertigung von Passungsstellen sowie das Einpressen des Deckels entfällt.

In Fig. 9 ist darüberhinaus dargestellt, daß das auf die Lauffläche 83 des Hohlkolbens 10 einwirkende Kräftepaar F₁ nicht auf den Deckel 41 einwirkt, da dieser gegenüber den Laufflächen 83 in radialer Richtung zurückgesetzt ist. Die Schweißnähte 82 werden daher im Betrieb nicht mit Schubkräften beaufschlagt.

Die Erfindung ist nicht auf das dargestellte Ausführungsbeispiel begrenzt. Vielmehr sind eine Vielzahl von Hohlkolbenkonfigurationen denkbar, bei welchen das erfindungsgemäße Radialschweißverfahren angewandt werden kann.

## Patentansprüche

1. Hohlkolben (10) für eine Kolbenmaschine (1) mit einem Hauptkörper (40), welcher ausgehend von einer einen Gelenkkopf (12) tragenden Stirnwand (44) nach der von dem Gelenkkopf (12) abgelegenen Seite der Stirnwand (44) erstreckend einen zentralen Dorn (45) mit einer den Dorn (45) zentrisch durchdringenden Zentralbohrung (49) und einen den zentralen Dorn (45) über seine gesamte Länge mit Abstand umschließenden Mantel (46) aufweist, wobei der zwischen dem Dorn (45) und dem Mantel (46) des Hauptkörpers (40) ausgebildete Ringraum (47) durch einen mit dem Dorn (45) und Mantel (46) verschweißten Deckel (41) verschlossen ist,
**dadurch gekennzeichnet,**
**daß** der Deckel (41) an einer planen, senkrecht zur Längsachse (52) des Hohlkolbens (10) ausgerichteten Fläche (50, 51) mit dem Hauptkörper (40) so verschweißt ist, daß sich eine radiale Schweißnaht (82) über den gesamten Bereich des Mantels (46) und einen nur peripheren Bereich des Dorns (45) erstreckt, welcher nicht bis zum Umfang der Zentralbohrung (49) reicht.

2. Hohlkolben (10) für eine Kolbenmaschine (1) mit einem Hauptkörper (40), welcher ausgehend von einer einen Gelenkkopf (12) tragenden Stirnwand (44) nach der von dem Gelenkkopf (12) abgelegenen Seite der Stirnwand (44) erstreckend einen zentralen, mit dem Gelenkkopf einteiligen Dorn (45) mit einer den Dorn (45) zentrisch durchdringenden Zentralbohrung (49) und einen den zentralen Dorn (45) mit Abstand umschließenden Mantel (46) aufweist, wobei der zwischen dem Dorn (45) und dem Mantel (46) des Hauptkörpers (40) ausgebildete Ringraum (47) durch einen mit dem Dorn (45) und Mantel (46) verschweißten Deckel (41) verschlossen ist,
**dadurch gekennzeichnet,**
**daß** der Deckel (41) an einer planen, senkrecht zur Längsachse (52) des Hohlkolbens (10) ausgerichteten Fläche (50, 51) mit dem Hauptkörper (40) so verschweißt ist, daß sich eine radiale Schweißnaht (82) über den gesamten Bereich des Mantels (46) und einen nur peripheren Bereich des Dorns (45) erstreckt, welcher nicht bis zum Umfang der Zentralbohrung (49) reicht.

3. Hohlkolben nach Anspruch 1 oder 2,
**dadurch gekennzeichnet,**
**daß** die Schweißnaht (82) gegenüber dem äußeren Umfang des Mantels (46) zur zentralen Längsachse (52) des Hohlkolbens hin dadurch zurückgesetzt ist, daß der Deckel (41) einen geringeren Durchmesser aufweist als der äußere Umfang des Mantels (46) des Hauptkörpers (40).

4. Hohlkolben nach einem der Ansprüche 1 bis 3,
**dadurch gekennzeichnet,**
**daß** der Deckel (41) eine dem Ringraum (47) des Hauptkörpers (40) gegenüberliegende Ausnehmung (48) aufweist.

5. Hohlkolben nach einem der Ansprüche 1 bis 4,
**dadurch gekennzeichnet, daß** der Deckel (41) und der Hauptkörper (40) durch Elektronenschweißen miteinander verschweißt sind.

6. Hohlkolben nach einem der Ansprüche 1 bis 5,
**dadurch gekennzeichnet, daß** die Zentralbohrung (49) auch die Stirnplatte (44) und den Gelenkkopf (12) zumindest teilweise durchdringt.

7. Verfahren zum Herstellen eines Hohlkolbens (10) nach einem der Ansprüche 1 bis 6 mit folgenden Verfahrensschritten:
- Herstellen des Hauptkörpers (40) und Deckels (41),
- Axiales Ausrichten des Deckels (41) in Bezug auf die Längsachse (52) des Hauptkörpers (40) und Zusammenfügen von Hauptkörper (40) und Deckel (41),
- synchrones Rotieren von Hauptkörper (40) und Deckel (41),
- Verschweißen von Deckel und Hauptkörper, indem die Trennfläche (50, 51) von Deckel (41) und Hauptkörper (40) während der Rotation einer senkrecht zur Längsachse (52) des Hohlkolbens (10) ausgerichteten, radialen Elektronenstrahlung ausgesetzt wird,
- Regeln der Intensität der Elektronenstrahlung, so daß die Schweißnaht (82) einen vorgegebenen, radialen Abstand (D/2) von der zentralen Längsachse (49) des Hohlkolbens (10) erreicht, der kleiner als der Radius des Dorns (45) und größer als der Radius (d/2) der einzubringenden Zentralbohrung (49) ist und
- Einbringen einer den Deckel (41) durchdringenden Zentralbohrung (49) in den Dorn (47) des Hauptkörpers (40).

8. Verfahren nach Anspruch 7,
**dadurch gekennzeichnet,**
**daß** die Intensität und die Dauer der Elektronenstrahlung so gewählt sind, daß im Bereich der einzubringenden Zentralbohrung (49) keine materialerhärtende Erhitzung erfolgt.

## Claims

1. Hollow piston (10) for a plunger injection moulding machine (1) with a main body (40) that has a central mandrel (45) starting from a front wall (44) carrying an articulated head (12) and extending to the side of the front wall (44) remote from the articulated head (12), together with a central bore (49) passing centrally through the mandrel (45) and a jacket (46) surrounding the central mandrel (45) over its whole length and spaced therefrom, wherein the annular space (47) formed between the mandrel (45) and the jacket (46) of the main body (40) is closed by a cover (41) welded to the mandrel (45) and jacket (46), **characterised in that** the cover (41) is welded to the main body (40) on a planar surface (50, 51) aligned perpendicular to the longitudinal axis (52) of the hollow piston (10) in such a way that a radial weld seam (82) extends over the whole region of the jacket (46) and over an only peripheral region of the mandrel (45) that does not reach as far as the circumference of the central bore (49).

2. Hollow piston (10) for a plunger injection moulding machine (1) with a main body (40) that has a mandrel (45) integral with an articulated head, starting from a front wall (44) carrying the articulated head (12) and extending to the side of the front wall (44) remote from the articulated head (12), together with a central bore (49) passing centrally through the mandrel (45) and a jacket (46) surrounding the central mandrel (45) and spaced therefrom, wherein the annular space (47) formed between the mandrel (45) and the jacket (46) of the main body (40) is closed by a cover (41) welded to the mandrel (45) and jacket (46), **characterised in that** the cover (41) is welded to the main body (40) on a planar surface (50, 51) aligned perpendicular to the longitudinal axis (52) of the hollow piston (10) in such a way that a radial weld seam (82) extends over the whole region of the jacket (46) and over an only peripheral region of the mandrel (45) that does not reach as far as the circumference of the central bore (49).

3. Hollow piston according to claim 1 or 2, **characterised in that** the weld seam (82) opposite the external circumference of the jacket (46) is set back relative to the central longitudinal axis (52) of the hollow piston so that the cover (41) has a smaller diameter than the external circumference of the jacket (46) of the main body (40).

4. Hollow piston according to one of claim 1 to 3, **characterised in that** the cover (41) has a recess (48) situated opposite the annular space (47) of the main body (40).

5. Hollow piston according to one of claim 1 to 4, **characterised in that** the cover (41) and the main body (40) are welded to one another by electron beam welding.

6. Hollow piston according to one of claim 1 to 5, **characterised in that** the central bore (49) also at least partially passes through the front plate (44) and the articulated head (12).

7. Process for the production of a hollow piston (10) according to one of claims 1 to 6, by means of the following process steps:
- production of the main body (40) and cover (41),
- axial alignment of the cover (41) in relation to the longitudinal axis (52) of the main body (40) and joining of the main body (40) and cover (41),
- synchronous rotation of the main body (40) and cover (41),
- welding of the cover and main body by subjecting the boundary surface (50, 51) of the cover (41) and main body (40) during the rotation to a radial electron beam aligned perpendicular to the longitudinal axis (52) of the hollow piston (10),
- regulating the intensity of the electron beam so that the weld seam (82) reaches a predetermined radial spacing (D/2) from the central longitudinal axis (49) of the hollow piston (10) that is smaller than the radius of the mandrel (45) and larger than the radius (d/2) of the central bore to be introduced, and
- introduction of a central bore (49) in the mandrel (47) of the main body (40) passing through the cover (41).

8. Process according to claim 7, **characterised in that** the intensity and duration of the electron beam are chosen so that no material-hardening heating takes place in the region of the central bore (49) to be introduced.

## Revendications

1. Piston creux (10) pour une machine à piston (1) ayant un corps principal (40) qui comprend une broche centrale (45) avec un perçage central (49) traversant centralement la broche (45), la broche s'étendant à partir d'une paroi frontale (44) portant une tête d'articulation (12) du côté opposé de la paroi frontale (44) par rapport à la tête d'articulation, le corps principal comprenant en outre une enveloppe (46) entourant avec un espace la broche centrale (45) sur toute sa longueur, l'espace annulaire (47) ainsi formé entre la broche (45) et l'enveloppe (46) du corps principal (40) étant fermé par un couvercle (41) soudé avec la broche (45) et l'enveloppe (46), **caractérisé en ce que** le couvercle (41) est soudé au corps principal (40) selon une surface (50, 51) plane orientée perpendiculairement à l'axe longitudinal (52) du piston creux, de telle sorte qu'une soudure radiale (82) s'étend sur toute la zone de l'enveloppe (46) et uniquement sur une zone périphérique de la broche (45) qui n'atteint pas le pourtour du perçage central (49).

2. Piston creux (10) pour une machine à piston (1) ayant un corps principal (40) qui comprend une broche centrale (45) formant une seule pièce avec une tête d'articulation, avec un perçage central (49) traversant centralement la broche (45), la broche s'étendant à partir d'une paroi frontale (44) portant la tête d'articulation (12) du côté opposé de la paroi frontale (44) par rapport à la tête d'articulation, le corps principal comprenant en outre une enveloppe (46) entourant avec un espace la broche centrale (45), l'espace annulaire (47) ainsi formé entre la broche (45) et l'enveloppe (46) du corps principal (40) étant fermé par un couvercle (41) soudé avec la broche (45) et l'enveloppe (46), **caractérisé en ce que** le couvercle (41) est soudé au corps principal (40) selon une surface (50, 51) plane orientée perpendiculairement à l'axe longitudinal (52) du piston creux, de telle sorte que une soudure radiale (82) s'étend sur toute la zone de l'enveloppe (46) et uniquement sur une zone périphérique de la broche (45) qui n'atteint pas le pourtour du perçage central (49).

3. Piston creux selon la revendication 1 ou 2, **caractérisé en ce que** la soudure (82) est décalée vers l'axe longitudinal (52) central du piston par rapport à la périphérie externe de l'enveloppe (46), de façon à ce que le couvercle (41) présente un diamètre plus petit que la périphérie extérieure de l'enveloppe (46) du corps principal (40).

4. Piston creux selon l'une des revendications 1 à 3, **caractérisé en ce que** le couvercle (41) comprend un évidement (48) s'étendant en face de l'espace annulaire (47) du corps principal (40).

5. Piston creux selon l'une des revendications 1 à 4, **caractérisé en ce que** le couvercle (41) et le corps principal (40) sont soudés entre eux par soudage par bombardement électronique.

6. Piston creux selon l'une des revendications 1 à 5, **caractérisé en ce que** le perçage central (49) traverse au moins en partie le disque frontal (44) et la tête d'articulation (12).

7. Procédé de fabrication d'un piston creux (10) selon l'une des revendications 1 à 6 avec les étapes de procédé suivantes :
- fabrication du corps principal (40) et du couvercle (41),
- alignement axial du couvercle (41) par rapport à l'axe longitudinal (52) du corps principal (40) et assemblage du corps principal (40) et du couvercle (41),
- rotation synchrone du corps principal (40) et du couvercle (41),
- soudage du couvercle et du corps principal, dans lequel la surface de séparation (50, 51) du couvercle (41) et du corps principal (40), pendant la rotation, est exposée à un bombardement électronique radial orienté perpendiculairement à l'axe longitudinal (52) du piston creux (10),
- réglage de l'intensité du bombardement électronique, de façon à ce que la soudure (82) arrive à une distance (D/2) radiale prédéterminée de l'axe longitudinal (49) du piston creux (10), qui est plus petite que le rayon de la broche (45) et plus grande que le rayon (d/2) du perçage central (49) à réaliser, et
- réalisation, dans la broche (47) du corps principal (40), d'un perçage central traversant le couvercle (41).

8. Procédé selon la revendication 7, **caractérisé en ce que** l'intensité et la durée du bombardement électronique sont choisies de telle sorte qu'aucun échauffement durcissant la matière ne se produise dans la zone du perçage central (49) à réaliser.
